# EUROPÄISCHE PATENTSCHRIFT

(11) **EP 1 728 415 B1**
(45) Veröffentlichungstag und Bekanntmachung des Hinweises auf die Patenterteilung: **14.05.2008**
(21) Anmeldenummer: 06011356.0
(22) Anmeldetag: 01.06.2006
(51) Int. Cl.: A01D 34/135

(54) **Verfahren und Vorrichtung zum Abschneiden von Schnittgut mit einem Mähbalken**
Method and apparatus for cutting of grass cuttings with a cutter bar
Méthode et appareil pour couper des matières coupées avec une barre de coupe

(30) Priorität: 03.06.2005 DE 102005025575
(43) Veröffentlichungstag der Anmeldung: 06.12.2006
(73) Patentinhaber: ESM ENNEPETALER SCHNEID- UND MÄHTECHNIK GMBH & CO. KG, D-58256 Ennepetal (DE)
(72) Erfinder: Schlasse, Manfred, 58089 Hagen (DE)
(74) Vertreter: Rehberg Hüppe + Partner

(56) Entgegenhaltungen:
- EP-A- 0 963 691
- GB-A- 592 692
- US-A- 3 657 868

## Beschreibung

Die Erfindung betrifft ein Verfahren und eine Vorrichtung zum Abschneiden von Schnittgut mit einem Mähbalken, der ein mit in einer ersten Teilung angeordneten Messerklingen besetztes Obermesser und ein mit in einer anderen Teilung angeordneten Messerklingen besetztes Untermesser aufweist, wobei zumindest das Obermesser hin- und hergehend angetrieben wird.

Mähbalken dieser Art dienen dazu, Schnittgut, insbesondere Halmgut, wie Gras, Klee, Getreide und dergleichen zu schneiden. Weitere Anwendungen sind der Schnitt von Hecken, die Straßenrandpflege und die Pflege von Sportanlagen.

### STAND DER TECHNIK

Aus der DE 31 02 861 A1 ist ein Mähbalken in Form eines Doppelmesser-Schneidwerks bekannt. Der Mähbalken weist ein Obermesser und ein Untermesser auf, die beide gegenläufig hin- und hergehend angetrieben werden. Auf dem Obermesser und auf dem Untermesser sind Messerklingen gleicher Gestalt und Größe angeordnet. Die Teilung der Messerklingen auf dem Obermesser ist jedoch eine andere als die Teilung der Messerklingen auf dem Untermesser. Pro Längeneinheit sind auf dem Obermesser fünf Messerklingen und auf dem Untermesser sechs Messerklingen angeordnet, so dass die Messerklingen auf dem Obermesser in einer vergleichsweise größeren Teilung angeordnet sind. Die Teilung der Messerklingen auf dem Obermesser kann 76,2 mm und somit die auf dem Untermesser 63,5 mm betragen. Die Hübe, mit denen das Obermesser und das Untermesser angetrieben werden, sind gleich groß gewählt. Dieser Hub entspricht der halben Teilung der Obermesser, also etwa 38 mm. Mit dieser Ausbildung des Mähbalkens soll erreicht werden, dass Schnittkraftspitzen über den Messerhub verteilt und damit ausgeprägte Schnittkraftspitzen eingeebnet werden. Ein solcher Mähbalken arbeitet nach dem Scherenschnittprinzip, bei dem die Messerklingen des Obermessers mit den Messerklingen des Untermessers so zusammenarbeiten, dass das Schnittgut, beispielsweise die stehenden Grashalme, wie mit einer Schere durchschnitten werden. Nachteilig an diesem bekannten Mähbalken ist es, dass pro Hub die Überschneidung zwischen den Messerklingen des Obermessers und den Messerklingen des Untermessers mindestens in einer Schneidlücke nicht vollständig ist. Dies führt dazu, dass hier etwas längere Stoppeln stehen bleiben, was vor allem bei großen Vorschüben deutlich sichtbar wird. Das Obermesser und das Untermesser weisen auch nur relativ geringe Standzeiten auf. So ist es beispielsweise erforderlich, das Obermesser nach einer Einsatzzeit von etwa 4-8 Stunden nachzuschärfen.

Aus der DE 36 01 875 A1 ist ein Mähbalken bekannt, dessen Obermesser und Untermesser hin- und hergehend angetrieben werden. Auch hier sind die Messerklingen auf dem Obermesser und dem Untermesser pro Längeneinheit in einem Verhältnis von 5:6 angeordnet. Die Teilung, mit der die Messerklingen auf dem Obermesser angeordnet sind, ist also größer. Zusätzlich sind die Messerklingen auf dem Untermesser länger als die Messerklingen auf dem Obermesser, so dass sie in Fahrtrichtung vorstehen. Auch damit soll eine Verteilung der Kraftspitzen auf den Hub erreicht werden. Das Obermesser und das Untermesser werden mit 250-350 Hüben je Minute verhältnismäßig langsam angetrieben.

Aus der DE 198 26 289 C1 ist ein Mähbalken bekannt, der ein Obermesser und ein Untermesser aufweist, die jeweils mit Messerklingen besetzt sind. Es ist entweder das Obermesser oder das Untermesser oder beide Messer hin- und hergehend angetrieben. Pro Längeneinheit ist auch hier die Anzahl der Messerklingen des Obermessers ungleich der Anzahl der Messerklingen auf dem Untermesser. Die Teilungen können im Verhältnis von 2:3 stehen. Um bei gleicher Mähbreite eine verringerte Antriebsleistung der Antriebseinheit zu benötigen oder bei gleicher Antriebsleistung der Antriebseinheit eine vergrößerte Mähbreite zuzulassen, sind die Messerklingen des Obermessers oder des Untermessers mit mindestens zwei unterschiedlich großen Teilungen auf ihrem jeweiligen zugehörigen Messerrücken angeordnet.

Bei diesen hin- und hergehend angetriebenen Obermessern und/oder Untermessern dieser bekannten Mähbalken wird der Antrieb jeweils von einem Kurbeltrieb abgenommen, so dass sich für die Messerklingen in den Umkehrpunkten der Hübe die Geschwindigkeit 0 m/sec und in Hubmitte eine Maximalgeschwindigkeit ergibt. Die Kurbeltriebe werden mit Drehzahlen in der Größenordnung von 500 bis etwa 1.600 U/min angetrieben. Je nach den Übersetzungsverhältnissen zwischen Kurbeltrieb und den Messerklingen auf dem Ober- und/oder Untermesser ergeben sich dabei in Hubmitte Maximalgeschwindigkeiten in einem Bereich von 0,65 bis etwa 3 m/sec. Dieser Geschwindigkeitsbereich erlaubt ein sauberes Schneiden mit solchen Mähbalken nach dem Scherenschnittprinzip. Das Scherenschnittprinzip hat allerdings den Nachteil, dass das Schnittgut in erheblichem Umfang an den Schneiden der Messerklingen entlang streicht oder rutscht, bevor der eigentliche Schnittvorgang durch Kontakt zweier Schneiden zweier gegenläufig bewegter Messerklingen stattfindet. Bei diesem Entlangstreichen oder Entlangrutschen der Halme relativ zu den Schneiden bewegen sich die Halme bei üblichen Fahr- und Arbeitsgeschwindigkeiten in Fahrt- bzw. Arbeitsrichtung nach vorn. Dadurch kommt es zu einer Ansammlung abgeschnittenen Schnittguts vor dem Messerbalken. Das Schnittgut fließt nicht mehr über den Messerbalken nach hinten ab. Bei diesem Gleitvorgang der Halme relativ zu den Schneiden entsteht darüber hinaus Reibung und Verschleiß an den Schneiden der Messerklingen. Dies führt dazu, dass die Messerstandzeit z. B. des Obermessers mit etwa 4-8 Stunden relativ gering ist. Es wird ein Nachschärfen erforderlich, welches in der Regel durch einen Schleifvorgang erfolgt. Dieser hohe Wartungsaufwand für das Schleifen der Messer, einschließlich des jeweiligen Aus- und Wiedereinbaus an den Mähbalken, ist ein weiterer beachtlicher Nachteil der bekannten Mähbalken.

Die US -A-3,657,868 zeigt und beschreibt ein Schneidwerk mit einem Obermesser und einem Untermesser. Auf dem Obermesser und dem Untermesser sind Schneidzähne gleicher Gestalt und Größe angeordnet. Die Teilung der Schneidzähne stimmt mit dem Hub der Obermesser und der Untermesser überein. Obermesser und Untermesser sind in der Ausgangsstellung so angeordnet, dass sie einander decken, so dass das Schneidwerk in der Offenstellung steht und das Schnittgut bei vorwärts bewegten Schneidwerk zwischen die Schneidzähne eintreten kann. Diese Offenstellung, in der das Obermesser relativ zum Untermesser stillsteht, wird über 94 % der Zeit einer Schnittperiode aufrechterhalten, so dass das Schnittgut hinreichend Zeit und Gelegenheit hat, in die offen stehenden Spalte zwischen den Schneidzähnen einzudringen. Diese relativ langen Stillstandszeiten, in denen kein Antrieb erfolgt, werden durch Schnittperioden unterbrochen, die in kurzen Zeitintervallen stattfinden, die etwa 6 % der gesamten Zeit ausmachen. In diesen Schnittperioden werden die Schneidzähne schlagartig gegenläufig betätigt, wobei die Schneidzähne nach dem Scherenschnittprinzip arbeiten und ihre größte Geschwindigkeit dann erreichen, wenn die Schneiden der Schneidzähne aus Obermesser und Untermesser zusammentreffen. Eine tatsächliche Schnittarbeit wird jedoch nur während des Vorwärtshubs erreicht, also etwa während 3 % der Gesamtzeit einer Schnittperiode, weil der Rückwärtshub direkt an den Vorwärtshub anschließt und somit für das Schnittgut keine Möglichkeit besteht, in einen Spalt einzutreten und geschnitten zu werden. Dieses Schneidwerk arbeitet unter Verwirklichung eines stoß- oder schlagartig ausgebildeten Scherenschnitts, d. h. die Schneidzähne haben ihre größte Geschwindigkeit, während sie einander überstreichen, also einen Scherenschnitt ausführen. Von einem Impulsschnitt wird kein Gebrauch gemacht.

### AUFGABE DER ERFINDUNG

Der Erfindung liegt die Aufgabe zugrunde, ein Verfahren und eine Vorrichtung zum Abschneiden von Schnittgut mit einem Mähbalken aufzuzeigen, bei denen eine im Vergleich zum Stand der Technik erheblich verlängerte Messerstandzeit auftritt.

### LÖSUNG

Die Aufgabe der Erfindung wird erfindungsgemäß mit den Merkmalen der unabhängigen Patentansprüche gelöst.

### BESCHREIBUNG DER ERFINDUNG

Die Erfindung geht von dem Gedanken aus, das Obermesser in Hubmitte mit einer derart gesteigerten Maximalgeschwindigkeit anzutreiben, dass im Bereich um die Hubmitte ein Impulsschnitt und in den Umkehrbereichen des Hubes Scherenschnitt verwirklicht wird. Beim Scherenschnitt werden die Halme - wie mit einer Schere - durch Kontakt mit zwei sich gegenläufig bewegenden Messern durchschnitten. Beim Impulsschnitt wird die Geschwindigkeit, mit der eine Schneide einer Messerklinge allein auf einen Halm auftrifft, so gesteigert, dass der Halm keine Möglichkeit hat, an der Schneide nach vorn entlang zu gleiten und sich damit relativ zur Schneide nach vorn zu bewegen. Die Masse des Mähbalkens lässt sich nur in relativ engen Grenzen verändern, die Masse des zu schneidenden Halms ist nicht beeinflussbar. Insoweit kommt es beim Impulsschnitt im Wesentlichen auf die Geschwindigkeit der Schneiden an. Die im Impulsschnitt eingesetzten Geschwindigkeiten sind zwar immer noch geringer als die Geschwindigkeiten, die beim Freischnitt mit rotierend angetriebenen Klingen erzielt werden, aber andererseits deutlich höher als die bisher beim Scherenschnitt angewendeten Geschwindigkeiten. Beim Impulsschnitt werden die Halme des Schnittguts an Ort und Stelle durch eine einzelne Schneide teilweise geknickt, teilweise eingeschnitten oder sogar ganz durchtrennt. Der Schneidzyklus eines einfachen Hubes des Obermessers lässt sich in vier etwa gleich große Teilwege unterteilen. Während des ersten Teilweges beginnt das Schnittgut bei maximal großen Schneidlücken ohne nennenswerten Kontakt mit den Schneiden in die Schneidlücken einzudringen. Während des zweiten und dritten Teilweges bis zum Beginn des Schließens der Schere wirkt sich die vergleichsweise erheblich erhöhte Geschwindigkeit der Schneide des Obermessers so aus, dass das Schnittgut teilweise eingeknickt, teilweise angeschnitten und teilweise abgeschnitten wird. Das Schnittgut hat keine Zeit sich relativ zu den Schneiden zu bewegen. Ein verschleißförderndes Gleiten an den Schneiden der Messerklingen unterbleibt weitgehend. Während des letzten Teilweges wird sämtliches Schnittgut, das noch nicht abgeschnitten ist, nach dem Prinzip des Scherenschnitts abgeschnitten. Insbesondere im Anfangsbereich dieses vierten Teilweges ist die Geschwindigkeit des Obermessers in der sich bildenden Schere immer noch deutlich höher als im Stand der Technik. Hierauf ist es möglicherweise zurückzuführen, dass auch stärker abgestumpfte Schneiden von Messerklingen den Schneidvorgang noch einwandfrei ausführen und sich somit die Standzeit verlängert. Jedenfalls verlängern sich überraschenderweise beim Impulsschnitt die Standzeiten des Mähbalkens, so dass das erforderliche Nachschärfen erst nach längeren Einsätzen anfällt.

Der geschnittene Halm verlässt den Mähbalken auch bei normalen oder auch gesteigerten Arbeitsgeschwindigkeiten entgegen der Arbeitsrichtung nach hinten. Es stellt sich ein unbehinderter Fluss des geschnittenen Schnittguts nach hinten über den Mähbalken ein. Auch gesteigerte Arbeitsgeschwindigkeiten führen also nicht zu Verstopfungen am Mähbalken.

Trotz der in Hubmitte gesteigerten Maximalgeschwindigkeit des Obermessers werden der Impulsschnitt und der Scherenschnitt aufeinander abgestimmt. Einerseits wird während eines einfachen Hubes des Obermessers relativ zum Untermesser eine hinreichende Zeit zum Eindringen des Schnittgutes in die Schneidlücken bereitgestellt. Dann folgt der Impulsschnitt unter Anwendung erheblich gesteigerter Geschwindigkeiten mit einem Durchlauf durch die Maximalgeschwindigkeit in Hubmitte. Schließlich wird sämtliches noch nicht geschnittenes Schnittgut im Scherenschnitt durchgeschnitten, wobei anfänglich ebenfalls vergleichsweise erhöhte Schnittgeschwindigkeiten Anwendung finden. Auch der Hub und die Geschwindigkeit des Untermessers sind vergleichsweise erhöht. Wegen der erhöhten, für den Impulsschnitt notwendigen Geschwindigkeiten ist es von Vorteil, wenn ein solcher Mähbalken als Doppelmesserbalken ausgeführt ist. Die Massenkräfte beeinflussen sich gegenseitig vorteilhaft und die auftretenden Schwingungen werden beherrschbar. Außerdem wird durch ein angetriebenes Untermesser die absolute Schnittgeschwindigkeit erhöht, die in der Phase des Scherenschnitts voll zur Geltung kommt.

Das Obermesser ist in Hubmitte mit einer Maximalgeschwindigkeit zwischen etwa 5 m/s und etwa 10 m/s, vorzugsweise zwischen etwa 6 m/s und etwa 7 m/s, angetrieben werden. Die Maximalgeschwindigkeit liegt damit mindestens etwa doppelt so hoch wie im Stand der Technik im Scherenschnitt. Der Bereich der Maximalgeschwindigkeit wird jedoch nicht im Scherenschnitt, sondern im Impulsschnitt, genutzt. Aber auch im Bereich des Scherenschnitts wirken sich die erhöhten Geschwindigkeiten vorteilhaft aus.

Zur Steigerung der Maximalgeschwindigkeit des Obermessers in Hubmitte werden der Hub und die Teilung der Messerklingen des Obermessers vergrößert. Die Steigerung der Messergeschwindigkeit wird durch Vergrößerung des Hubes, nicht durch Vergrößerung der Umdrehungen des Antriebes erreicht. Um trotzdem hinreichend große Schneidlücken für das Eindringen des Schnittgutes in den Mähbalken zu schaffen und zur Verfügung zu stellen, kann praktisch jede zweite Messerklinge auf dem Obermesser entfallen.

Eine zur Durchführung des Verfahrens in besonderer Weise geeignete Vorrichtung zum Abschneiden von Schnittgut mit einem ein Obermesser und eine Untermesser aufweisenden Mähbalken weist einen Antrieb für die hin- und hergehende Bewegung des Obermesser und des Untermessers auf. Das Obermesser und das Untermesser sind mit Messerklingen besetzt, jedoch in voneinander abweichender Anordnung. So sind die Messerklingen des Obermessers in einer ersten Teilung und die Messerklingen des Untermessers in einer zweiten, vergleichsweise kleineren Teilung angeordnet. Die Gestalt und die Abmessungen der Messerklingen können der herkömmlichen Gestaltung entsprechen. Der Antrieb für das Obermesser ist so ausgebildet, dass das Obermesser in Hubmitte mit einer derart gesteigerten Maximalgeschwindigkeit angetrieben wird, dass im Bereich um die Hubmitte ein Impulsschnitt und in den Umkehrbereichen des Hubes Scherenschnitt verwirklicht wird. Mit einer solchen Vorrichtung wird erstmals ein so genannter Impulsschnitt verwirklicht. Die wesentlichen Schnittgeschwindigkeiten, insbesondere im Bereich um die Maximalgeschwindigkeit, werden dabei so gesteigert, dass sie mindestens etwa doppelt so hoch liegen wie bisher im Scherenschnitt verwirklicht, aber andererseits noch erheblich geringer sind, als bisher im Freischnitt verwirklicht. Neben dem Scherenschnitt und dem Freischnitt wird also hier eine neue Schnittart, ein neuer Schnittgeschwindigkeitsbereich, geschaffen und genutzt.

Bei gleicher oder etwa gleicher geometrischer Gestalt der Messerklingen des Obermessers und des Untermessers beträgt das Verhältnis der Teilung der Messerklingen auf dem Obermesser zu der Teilung der Messerklingen auf dem Untermesser etwa 2:1. Bisher fanden allenfalls Teilungsverhältnisse von 6:5 Anwendung. Damit waren pro Längeneinheit auf dem Obermesser 5 Messerklingen und in Verbindung damit auf dem Untermesser 6 Messerklingen pro Längeneinheit angeordnet. Jetzt sind pro Längeneinheit auf dem Obermesser z. B. 2 Messerklingen und in Verbindung damit auf dem Untermesser 4 Messerklingen pro Längeneinheit angeordnet.

Die Messerklingen auf dem Obermesser sind mit derart groß bemessenen Lücken zwischen benachbarten Messerklingen angeordnet, dass das Schnittgut beim Schneiden in diese Lücken trotz der gesteigerten Maximalgeschwindigkeit eindringen kann. Die Lücken sind hinreichend groß und werden auch für eine hinreichende Zeit gebildet und zur Verfügung gestellt, so dass das Eindringen des Schnittgutes ermöglicht wird.

Insbesondere kann das Obermesser mit einem Hub von etwa 110 bis 130 mm und das Untermesser mit einem Hub von etwa 50 bis 80 mm in einem Drehzahlbereich von etwa 900 bis 1200 U/min angetrieben sein. Damit werden bekannte Drehzahlbereiche nicht verlassen. Im Gegenteil, es empfiehlt sich, nicht zu hoch liegende Drehzahlen anzuwenden. Die Vergrößerung der Geschwindigkeiten wird im Wesentlichen über eine Hubvergrößerung erreicht.

Die Messerklingen des Obermessers können bei herkömmlicher Gestalt in einer Teilung im Bereich zwischen etwa 150 mm und 210 mm auf dem Obermesserrücken und die Messerklingen des Untermessers bei herkömmlicher Gestalt in einer Teilung im Bereich zwischen etwa 70 mm und 110 mm auf dem Untermesserrücken angeordnet sein.

Der Gesamtmesserhub, also die Summe aus dem Messerhub des Obermessers und des Untermessers sollte so groß bemessen sein, dass bei jedem Doppelhub jede Lücke des Untermessers mindestens einmal von einer Messerklinge des Obermessers überstrichen wird.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche abweichend von den gewählten Rückbeziehungen ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Draufsicht auf einen Teil eines Mähbalkens mit den für die Erfindung wesentlichen Teilen der Vorrichtung.
- **Fig. 2**: zeigt eine Seitenansicht des Mähbalkens, teilweise geschnitten.
- **Fig. 3**: zeigt eine Draufsicht auf das Obermesser des Mähbalkens.
- **Fig. 4**: zeigt eine Draufsicht auf das Untermesser des Mähbalkens.
- **Fig. 5**: zeigt ein Schnittdiagramm mit der Darstellung der Relativbewegung der Messerklingen des Obermessers und des Untermessers zueinander.

### FIGURENBESCHREIBUNG

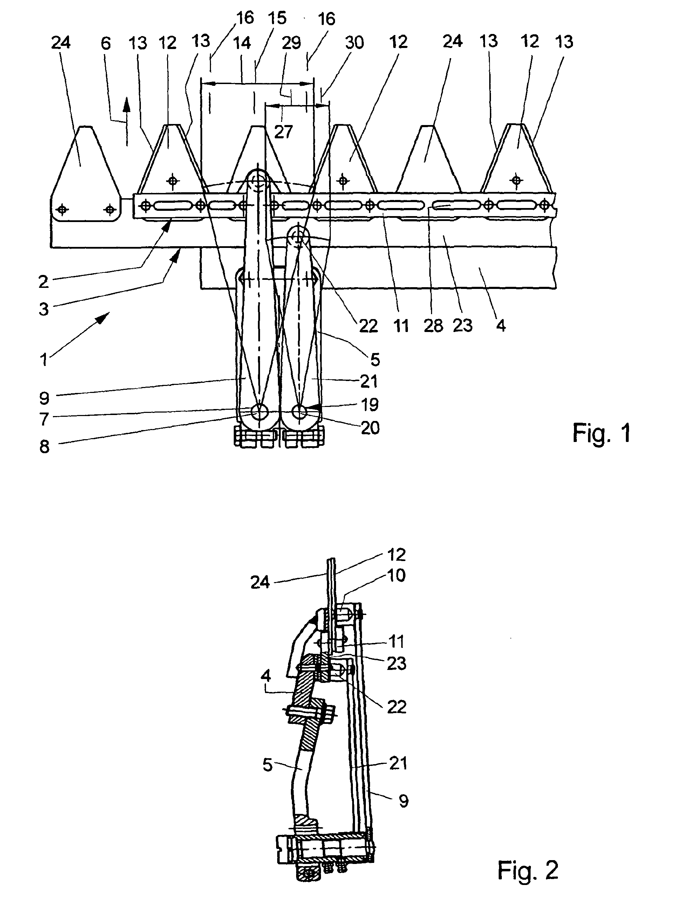

Fig. 1 zeigt einen Teil eines Mähbalkens 1 in einer Draufsicht von oben. Der Mähbalken 1 weist ein Obermesser 2 und ein Untermesser 3 auf.

An einem Balkenrücken 4 (siehe auch Fig. 2) sind über die Arbeitsbreite in regelmäßigen Abständen Halter 5 vorgesehen. Der Balkenrücken 4 erstreckt sich quer zur Fahr- bzw. Arbeitsrichtung gemäß Pfeil 6, während sich die Halter 5 entgegengesetzt dazu nach hinten erstrecken. Jeder Halter 5 besitzt ein erstes Lager 7 für einen Schwenkbolzen 8, mit dem ein Schwinghebel 9 drehfest verbunden ist. Jeder Schwinghebel 9 dient der Führung des Obermessers 2 bei seiner hin- und hergehenden Bewegung quer zur Arbeitsrichtung gemäß Pfeil 6 während des hin- und hergehenden Antriebs. Zu diesem Zweck greift jeder Schwinghebel 9 an einem Mitnehmer 10 an, der ortsfest mit einem Obermesserrücken 11 verbunden ist. Auf dem Obermesserrücken 11 sind Messerklingen 12 befestigt. Die Messerklingen 12 besitzen vorzugsweise die dargestellte etwa dreieckförmige Gestalt und sind mit Schneiden 13 ausgestattet.

Es versteht sich, dass über die Arbeitsbreite in entsprechenden Abständen mehrere solche Schwinghebel 9 vorgesehen und angeordnet sind, die insgesamt die Führung des Obermessers 2 übernehmen. An einer Stelle erfolgt die Einleitung des Antriebs für die hin- und hergehende Bewegung des Obermessers 2. Das Obermesser 2 bzw. die Messerklingen 12 des Obermessers 2 werden mit einem Hub 14 hin- und hergehend angetrieben. In Hubmitte 15 erreicht die Geschwindigkeit ein Maximum, während die Geschwindigkeit in Umkehrbereichen 16 stark abnimmt und in den Umkehrpunkten, also den Endpunkten des Hubs 14 jeweils die Geschwindigkeit Nullpunkte durchläuft. Der Antrieb des Obermessers erfolgt durch einen Kurbeltrieb (nicht dargestellt), wobei die Kreisbewegung in bekannter Weise in die schon beschriebene hin- und hergehende translatorische Bewegung umgeformt wird.

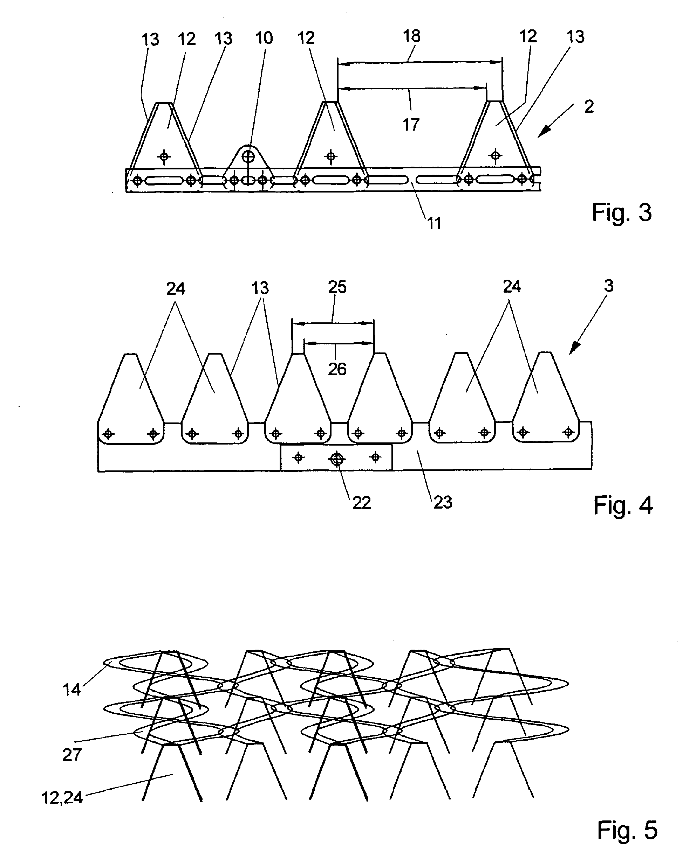

Wie insbesondere die Fig. 1 und 3 erkennen lassen, sind die Messerklingen 12 des Obermessers 2 in der dargestellten Weise auf Abstand angeordnet. Man erkennt, dass zwischen benachbarten Messerklingen 12 Lücken 17 gebildet sind. Anders gesagt sind die Messerklingen 12 des Obermessers 2 in einer relativ groß bemessenen Teilung 18 angeordnet. Fig. 3 erweckt den Eindruck, als ob im Vergleich zu bekannten Obermessern jede zweite Messerklinge 12 weggelassen ist.

Ähnlich wie das Obermesser 2 ist auch das Untermesser 3 hin- und hergehend an dem Mähbalken 1 bzw. relativ zu dem Balkenrücken 4 hin- und hergehend gelagert und angetrieben. Dementsprechend sind an den Haltern 5 oder an gesonderten Haltern in Lagern 19 Schwenkbolzen 20 gelagert. Mit jedem Schwenkbolzen 20 ist je ein Schwinghebel 21 drehfest verbunden. Jeder Schwinghebel 21 greift an einem Mitnehmer 22 an. Die Mitnehmer 22 sind an einem Untermesserrücken 23 vorgesehen. Es versteht sich, dass über die Arbeitsbreite gesehen der Untermesserrücken 23 mit entsprechenden Mitnehmern 22 versehen ist, denen jeweils ein Schwinghebel 21 zugeordnet ist. Der Untermesserrücken 23 ist mit Messerklingen 24 besetzt. Die Messerklingen 24 des Untermesserrückens 23 und die Messerklingen 12 des Obermesserrückens 11 können identische Gestalt aufweisen, so dass auch die Schneiden 13 der Messerklingen 24 im gleichen Winkel angeordnet sind wie die Schneiden 13 der Messerklingen 12 des Obermessers 2. Allerdings sind die Messerklingen 24 des Untermessers 3 in einer vergleichsweise kleineren Teilung 25 so nebeneinander angeordnet, dass sich auch vergleichsweise kleinere Lücken 26 zwischen benachbarten Messerklingen 24 ergeben. Das Untermesser 3 und damit die auf dem Untermesserrücken 23 sitzenden Messerklingen 24 werden mit einem Hub 27 (Fig. 1) hin- und hergehend angetrieben. Sowohl der Antrieb des Obermessers 2 wie auch der Antrieb des Untermessers 3 werden von einem kreisförmigen Rotationsantrieb abgeleitet. Es versteht sich, dass sich damit eine Bewegungsfunktion des Obermessers 2 und des Untermessers 3, jeweils nach einem Sinus ergibt. Der Hub 14 des Obermessers 2 ist größer als der Hub 27 des Untermessers 3. Auch die Teilung 18 der Messerklingen 12 des Obermessers 2 ist größer als die Teilung 25 der Messerklingen 24 des Untermessers 3. Zur Gewichtseinsparung kann der Obermesserrücken 11 mit Ausnehmungen 28 versehen sein.

Auch der Hub 27 der Messerklingen 24 des Untermessers 3 besitzt eine Hubmitte 29 sowie zwei Umkehrbereiche 30. Es versteht sich, dass auch hier in Hubmitte 29 die Maximalgeschwindigkeit des Antriebs des Untermessers 3 erreicht wird, während die Geschwindigkeit in den Umkehrbereichen 30 bis zu den Umkehrpunkten bis auf 0 abfällt.

Fig. 5 verdeutlicht anhand eines Schnitt-Diagramms die Bewegungen der Messerklingen 12 des Obermessers 2 relativ zu den Messerklingen 24 des Untermessers 3. Es sind hier die Hübe 14 und 27 in ihrer relativen Zuordnung zueinander dargestellt.

Nachfolgend werden konstruktive Einzelheiten einer bevorzugten Ausführungsform des Mähbalkens 1 aufgelistet:

| | |
|---|---|
| Hub 14 der Messerklingen 12 des Obermessers 2: | 110-120 mm |
| Hub 27 der Messerklingen 24 des Untermessers 3: | 60-70 mm |
| Messerhub insgesamt: | 170-190 mm |
| Teilung 18 der Messerklingen 12 des Obermessers 2: | 156-206 mm |
| Teilung 25 der Messerklingen 24 des Untermessers 3: | 73-103 mm |
| Antriebsdrehzahl für Obermesser 2 und Untermesser 3: | ca. 1.000-1.100 U/min |

Unter Berücksichtigung der Übersetzungsverhältnisse des Antriebs ergibt sich damit eine Maximalgeschwindigkeit des Obermessers 2 in Hubmitte 15 des Hubs 14, die im Bereich zwischen 5,7 m/sec und 6,9 m/sec liegt.

In dem Bereich um die Hubmitte 15 herum nimmt die Geschwindigkeit unter Durchlaufen des Wertes der Maximalgeschwindigkeit relativ große Werte an, d. h. die Messerklingen 12 des Obermessers 2 werden mit einer relativ großen Geschwindigkeit über einen erheblich ausgedehnten Bereich mit dem Schnittgut in Kontakt kommen. Hierbei wird über diesen Bereich der so genannte Impulsschnitt verwirklicht, bei dem die Schneiden 13 der Obermesser 12 allein in Kontakt zu einem Halm des Schnittguts geraten. Durch die hohe Geschwindigkeit, die jedenfalls mindestens doppelt so groß ist wie im Stand der Technik, wird der Halm angeschnitten, eingeschnitten oder sogar durchtrennt. Der Halm hat keine Gelegenheit, sich relativ zu der Schneide 13 der Messerklinge 12 zu bewegen. Damit wird der Verschleiß an den Schneiden 13 der Messerklingen 12 erheblich vermindert, was sich in einer Erhöhung der Standzeit der Messerklingen 12 des Obermessers 2 äußert. Das Obermesser 2 bekommt damit eine erhöhte Lebensdauer, bis ein Nachschleifen erforderlich wird.

In den Umkehrbereichen 16, also vor und nach den Umkehrpunkten der Hübe 14 und 27 des Obermessers 2 und des Untermessers 3, erfolgt ein Schneiden nach dem Scherenprinzip. Hierbei kommt der einzelne Halm des Schnittguts sowohl mit den Schneiden 13 der Messerklingen 12 wie auch mit den Schneiden 13 der Messerklingen 24 kurzzeitig in Kontakt. Da zumindest im Anfangsbereich dieser Umkehrbereiche 16 ebenfalls vergleichsweise höhere Geschwindigkeiten als im Stand der Technik vorliegen, ergeben sich auch hier höhere Standzeiten für das Untermesser 3. Teilweise verschlissene Schneiden 13 der Messerklingen 24 des Untermessers 3 erbringen infolge der höheren Geschwindigkeiten noch einen sauberen Schnitt über längere Zeiten.

### BEZUGSZEICHENLISTE

- 1: Mähbalken
- 2: Obermesser
- 3: Untermesser
- 4: Balkenrücken
- 5: Halter
- 6: Pfeil
- 7: Lager
- 8: Schwenkbolzen
- 9: Schwinghebel
- 10: Mitnehmer

- 11: Obermesserrücken
- 12: Messerklinge
- 13: Schneide
- 14: Hub
- 15: Hubmitte
- 16: Umkehrbereich
- 17: Lücke
- 18: Teilung
- 19: Lager
- 20: Schwenkbolzen

- 21: Schwinghebel
- 22: Mitnehmer
- 23: Untermesserrücken
- 24: Messerklinge
- 25: Teilung
- 26: Lücke
- 27: Hub
- 28: Ausnehmung
- 29: Hubmitte
- 30: Umkehrbereich

## Patentansprüche

1. Verfahren zum Abschneiden von Schnittgut mit einem Mähbalken (1), der ein mit in einer ersten Teilung (18) angeordneten Messerklingen (12) besetztes Obermesser (2) und ein mit in einer anderen Teilung (25) angeordneten Messerklingen (24) besetztes Untermesser (3) aufweist, wobei zumindest das Obermesser (2) hin- und hergehend angetrieben wird, **dadurch gekennzeichnet, dass** das Obermesser (2) in Hubmitte (15) mit einer derart gesteigerten Maximalgeschwindigkeit zwischen etwa 5 m/s und etwa 10 m/s angetrieben wird, dass im Bereich um die Hubmitte (15) ein Impulsschnitt, bei dem eine Schneide (13) einer Messerklinge (12) des Obermessers (2) allein auf einen Halm auftrifft, und in den Umkehrbereichen (16) des Hubes (14) Scherenschnitt verwirklicht wird.

2. Verfahren nach Anspruch 1, **dadurch gekennzeichnet, dass** das Obermesser (2) in Hubmitte (15) mit einer Maximalgeschwindigkeit zwischen etwa 6 m/s und etwa 7 m/s angetrieben wird.

3. Verfahren nach Anspruch 1 oder 2, **dadurch gekennzeichnet, dass** zur Steigerung der Maximalgeschwindigkeit des Obermessers (2) in Hubmitte (15) der Hub (14) und die Teilung (18) der Messerklingen (12) des Obermessers (2) vergrößert werden.

4. Vorrichtung zum Abschneiden von Schnittgut mit einem ein Obermesser (2) und ein Untermesser (3) aufweisenden Mähbalken (1), der einen Antrieb zumindest für die hin- und hergehende Bewegung des Obermesser (2) aufweist, wobei das Obermesser (2) und das Untermesser (3) mit Messerklingen (12, 24) besetzt sind und die Messerklingen (12) des Obermessers (2) in einer ersten Teilung (18) und die Messerklingen (24) des Untermessers (3) in einer zweiten, vergleichsweise kleineren Teilung (25) angeordnet sind, **dadurch gekennzeichnet, dass** der Antrieb für das Obermesser (2) so ausgebildet ist, dass das Obermesser (2) in Hubmitte (15) mit einer derart gesteigerten Maximalgeschwindigkeit zwischen etwa 5 m/s und etwa 10 m/s angetrieben wird, dass im Bereich um die Hubmitte (15) ein Impulsschnitt, bei dem eine Schneide (13) einer Messerklinge (12) des Obermessers (2) allein auf einen Halm auftrifft, und in den Umkehrbereichen (16) des Hubes (14) Scherenschnitt verwirklicht wird.

5. Vorrichtung nach Anspruch 4, **dadurch gekennzeichnet, dass** bei gleicher oder etwa gleicher geometrischer Gestalt der Messerklingen (12, 24) des Obermessers (2) und des Untermessers (3) das Verhältnis der Teilung (18) der Messerklingen (12) auf dem Obermesser (2) zu der Teilung (25) der Messerklingen (24) auf dem Untermesser (3) etwa 2:1 beträgt.

6. Vorrichtung nach Anspruch 4 oder 5, **dadurch gekennzeichnet, dass** die Messerklingen (12) auf dem Obermesser (2) mit derart groß bemessenen Lücken (17) zwischen benachbarten Messerklingen (12) angeordnet sind, dass das Schnittgut beim Schneiden in diese Lücken (17) trotz der gesteigerten Maximalgeschwindigkeit eindringen kann.

7. Vorrichtung nach mindestens einem der Ansprüche 4 bis 6, **dadurch gekennzeichnet, dass** das Obermesser (2) mit einem Hub (14) von etwa 110 bis 130 mm und das Untermesser (3) mit einem Hub (27) von etwa 50 bis 80 mm in einem Drehzahlbereich von etwa 900 bis 1200 U/min angetrieben sind.

8. Vorrichtung nach mindestens einem der Ansprüche 4 bis 7, **dadurch gekennzeichnet, dass** die Messerklingen (12) des Obermessers (2) bei herkömmlicher Gestalt in einer Teilung (18) im Bereich zwischen etwa 150 mm und 210 mm auf dem Obermesserrücken (11) und die Messerklingen (24) des Untermessers (3) bei herkömmlicher Gestalt in einer Teilung (25) im Bereich zwischen etwa 70 mm und 110 mm auf dem Untermesserrücken (23) angeordnet sind.

9. Vorrichtung nach mindestens einem der Ansprüche 4 bis 8, **dadurch gekennzeichnet, dass** der Gesamtmesserhub so groß bemessen ist, dass bei jedem Doppelhub jede Lücke (26) des Untermessers (3) mindestens einmal von einer Messerklinge (12) des Obermessers (2) überstrichen wird.

## Claims

1. A method for cutting growing vegetation with a cutter bar (1), the bar including a top cutter (2) carrying knives (12) arranged in a first pitch (18) and a bottom cutter (3) carrying knives (24) arranged in a different pitch (25), at least the top cutter (2) being driven in a back and forward motion, **characterized in that** the top cutter (2) is driven with an increased maximum speed in the middle (15) of its stroke between about 5 m/sec and about 10 m/sec, and **in that** in the region near to the middle (15) of the stroke impulse cutting is reduced to practice, in which a cutting edge (13) of a knife (12) of the top cutter (2) alone contacts a vegetation, and a scissors-like cutting is reduced to practice in the reverse regions (16) of the stroke (14).

2. The method of claim 1, **characterized in that** the top cutter (2) is driven with a maximum speed in the middle (15) of its stroke between about 6 m/sec and about 7 m/sec.

3. The method of claim 1 or 2, **characterized in that** the stroke (14) and the pitch (18) of the knives (12) of the top cutter (2) are enhanced in order to increase the maximum speed of the top cutter (2) in the region near to the middle (15) of the stroke.

4. An apparatus for cutting growing vegetation with a cutter bar (1) comprising a top cutter (2) and a bottom cutter (3), the cutter bar including a drive at least for a back and forward motion of the top cutter (2), the top cutter (2) and the bottom cutter (3) carrying knives (12, 24), the knives (12) of the top cutter (2) being arranged in a first pitch (18) and the knives (24) of the bottom cutter (3) being arranged in a second comparatively smaller pitch (25), **characterized in that** the drive of the top cutter (2) is designed and arranged to drive the top cutter with an increased maximum speed in the middle (15) of its stroke between about 5 m/sec and about 10 m/sec, and **in that** in the region near to the middle (15) of the stroke impulse cutting is reduced to practice, in which a cutting edge (13) of a knife (12) of the top cutter (2) alone contacts a vegetation, and a scissors-like cutting is reduced to practice in the reverse regions (16) of the stroke (14).

5. The apparatus of claim 4, **characterized in that** with the knives (12, 24) of the top cutter (2) and of the bottom cutter (3) having the same or about the same geometrical shape the ratio of the pitch (18) of the knives (12) on the top cutter (2) to the pitch (25) of the knives (24) on the bottom cutter (3) is about 2:1.

6. The apparatus of claim 4 or 5, **characterized in that** the knives (12) are designed and arranged on the top cutter (2) with large distances to each other to form gaps (17) so that the vegetation has the possibility to penetrate the gaps (17) during cutting action despite the increased maximum speed.

7. The apparatus of at least one of the claims 4 to 6, **characterized in that** the top cutter (2) is driven with a stroke of about 110 to 130 mm and the bottom cutter (3) is driven with a stroke (27) of about 50 to 80 mm both in a region of revolution between about 900 to 1200 rpm.

8. The apparatus of at least one of the claims 4 to 7, **characterized in that** the knives (12) of the top cutter (2) having the known design are arranged in a pitch (18) between about 150 mm to 210 mm on the bar (11) of the top cutter (2) and the knives (24) of the bottom cutter (3) having the known design are arranged in a pitch (25) between about 70 mm to 110 mm on the bar (23) of the bottom cutter (3).

9. The apparatus of at least one of the claims 4 to 8, **characterized in that** the total stroke is dimensioned to be so large that during each double stroke each gap (26) of the bottom cutter (3) is scanned at least once by a knife (12) of the top cutter (2).

## Revendications

1. Procédé de coupe de matières à couper avec une barre de coupe (1), avec une lame supérieure (2), munie de lames de coupe (12) réparties selon un premier pas (18), et une lame inférieure (3), munie de lames de coupe (24) réparties selon un autre pas (25), sachant qu'au moins la lame supérieure (2) est entraînée en va-et-vient, **caractérisé en ce que** la lame supérieure (2) est entraînée en milieu de course (15) avec une vitesse maximale plus élevée entre environ 5 m/s et environ 10 m/s, **en ce que** dans la zone autour du milieu de course (15) est réalisée une coupe par impulsion, dans laquelle une arête de coupe (13) d'une lame de coupe (12) de la lame supérieure (2) vient seule en contact avec la tige à couper, et dans les zones d'inversion (16) de la course (14) est réalisée une coupe en ciseaux.

2. Procédé selon la revendication 1, **caractérisé en ce que** la lame supérieure (2) est entraînée en milieu de course (15) avec une vitesse maximale entre environ 6 m/ s et environ 7 m/ s.

3. Procédé selon la revendication 1 ou 2, **caractérisé en ce que** pour accroître la vitesse maximale de la lame supérieure (2) en milieu de course (15), la course (14) et le pas (18) des lames de coupe (12) de la lame supérieure (2) sont agrandis.

4. Dispositif de coupe de matières à couper comportant une barre de coupe (1), qui est munie d'une lame supérieure (2) et d'une lame inférieure (3) et qui comporte un système d'entraînement au moins pour le mouvement de va-et-vient de la lame supérieure (2), ladite lame supérieure (2) et ladite lame inférieure (3) étant munies de lames de coupe (12, 24), et les lames de coupe (12) de la lame supérieure (2) étant réparties selon un premier pas (18) et les lames de coupe (24) de la lame inférieure (3) étant réparties selon un deuxième pas (25) relativement plus petit, **caractérisé en ce que** le système d'entraînement pour la lame supérieure (2) est réalisé de telle sorte que la lame supérieure (2) est entraînée en milieu de course (15) avec une vitesse maximale plus élevée entre environ 5 m/s et environ 10 m/s, de telle sorte que dans la zone autour du milieu de course (15) est réalisée une coupe par impulsion, dans laquelle une arête de coupe (13) d'une lame de coupe (12) de la lame supérieure (2) vient seule en contact avec la tige à couper, et dans les zones d'inversion (16) de la course (14) est réalisée une coupe en ciseaux.

5. Dispositif selon la revendication 4, **caractérisé en ce que**, avec une forme géométrique identique ou sensiblement identique des lames de coupe (12, 24) de la lame supérieure (2) et de la lame inférieure (3), le rapport entre le pas (18) des lames de coupe (12) sur la lame supérieure (2) et le pas (25) des lames de coupe (24) sur la lame inférieure (3) est de l'ordre de 2/1 environ.

6. Dispositif selon la revendication 4 ou 5, **caractérisé en ce que** les lames de coupe (12) sur la lame supérieure (2) sont disposées en laissant entre des lames de coupe (12) adjacentes des intervalles (17) dimensionnés de telle sorte que les matières à couper peuvent pénétrer pendant la coupe dans ces intervalles (17) malgré la vitesse maximale plus élevée.

7. Dispositif selon l'une quelconque des revendications 4 à 6, **caractérisé en ce que** la lame supérieure (2) est entraînée sur une course (14) de 110 à 130 mm environ et la lame inférieure (3) est entraînée sur une course (27) de 50 à 80 mm environ dans une plage de vitesses de rotation de 900 à 1 200 tr/min environ.

8. Dispositif selon l'une quelconque des revendications 4 à 7, **caractérisé en ce que** les lames de coupe (12) de la lame supérieure (2) avec une forme classique sont réparties sur le dos (11) de la lame supérieure selon un pas (18) dans la plage entre 150 mm et 210 mm environ, et les lames de coupe (24) de la lame inférieure (3) avec une forme classique sont réparties sur le dos (23) de la lame inférieure selon un pas (25) dans la plage entre 70 mm et 110 mm environ.

9. Dispositif selon l'une quelconque des revendications 4 à 8, **caractérisé en ce que** la course totale des lames est dimensionnée de telle sorte que, à chaque double course, chaque intervalle (26) sur la lame inférieure (3) reçoit au moins une fois une lame de coupe (12) de la lame supérieure (2).
